(19) Europäisches Patentamt
European Patent Office
Office européen des brevets

(11) **EP 4 212 573 A1**

(12) **EUROPEAN PATENT APPLICATION**
published in accordance with Art. 153(4) EPC

(43) Date of publication:
**19.07.2023 Bulletin 2023/29**

(21) Application number: **21866900.0**

(22) Date of filing: **13.09.2021**

(51) International Patent Classification (IPC):
**C08G 69/26** $^{(2006.01)}$      **C08G 69/28** $^{(2006.01)}$

(52) Cooperative Patent Classification (CPC):
**C08G 69/26; C08G 69/28**

(86) International application number:
**PCT/JP2021/033552**

(87) International publication number:
**WO 2022/054944 (17.03.2022 Gazette 2022/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.09.2020   JP 2020154107**
**06.04.2021   JP 2021064923**
**16.06.2021   JP 2021100247**

(71) Applicant: **Unitika Ltd.**
**Osaka-shi**
**Osaka 541-8566 (JP)**

(72) Inventors:
• **YAGI, Yusuke**
**Uji-shi, Kyoto 611-0021 (JP)**
• **HIROTA, Ami**
**Uji-shi, Kyoto 611-0021 (JP)**
• **NAKAI, Makoto**
**Uji-shi, Kyoto 611-0021 (JP)**
• **MARUO, Takeshi**
**Uji-shi, Kyoto 611-0021 (JP)**
• **TAKAISHI, Naoki**
**Uji-shi, Kyoto 611-0021 (JP)**

(74) Representative: **Vossius & Partner**
**Patentanwälte Rechtsanwälte mbB**
**Siebertstraße 3**
**81675 München (DE)**

(54) **POLYAMIDE, MOLDED BODY AND FILM FORMED OF SAME, AND METHOD FOR PRODUCING SAID POLYAMIDE**

(57)    The present invention provides a polyamide and a polyamide film which are more sufficiently superior in all of heat-resisting properties, flexibility properties and rubber elastic properties. The present invention relates to a polyamide comprising a unit comprised of an aliphatic dicarboxylic acid (A) having 18 or more carbon atoms, a unit comprised of an aliphatic diamine (B) having 18 or more carbon atoms, a unit comprised of an aromatic dicarboxylic acid (C) having 12 or less carbon atoms and a unit comprised of an aliphatic diamine (D) having 12 or less carbon atoms, wherein the polyamide has a melting point of 240 °C or more, a crystalline melting enthalpy of 20 J/g or more and an elongation recovery rate of 50 % or more in a hysteresis test, and a polyamide film comprising the polyamide.

Fig. 1 A

Example 1

EP 4 212 573 A1

**Description**

TECHNICAL FIELD

The present invention relates to a polyamide superior in all of heat-resisting properties, flexibility properties and rubber elastic properties, a molded body and a film comprising the same, and a method for producing the polyamide.

BACKGROUND ART

Polyamides having high flexibility properties and rubber elastic properties are widely used for tubes and hoses, daily necessities shoes, sealing materials, and the like. Such polyamides usually contain a polyether component or a polyester component in order to impart flexibility properties and rubber elastic properties. In recent years, application of such polyamides to automobile parts, electronic device accessories, and battery materials has been studied, and polyamides for use in the above-mentioned fields are required to have higher heat-resisting properties.

In order to obtain a polyamide having high heat-resisting properties, it is necessary to increase the polymerization temperature. When the polymerization temperature is increased, there is a problem that a polyether component and a polyester component used for imparting flexibility properties are decomposed, so that the molecular weight is reduced, resulting in further insufficient performance.

As a polyamide not using a polyether component or a polyester component, Patent Document 1 discloses a polyamide comprising terephthalic acid, 1,10-decanediamine, dimer acid, and dimer diamine. Patent Document 2 discloses a polyamide comprising adipic acid, 1,4-butylenediamine, dimer acid, and dimer diamine.

PRIOR ART DOCUMENTS

PATENT DOCUMENTS

Patent Document 1: WO 2020/085360 A
Patent Document 2: JP-A-2014-506614

SUMMARY OF THE INVENTION

PROBLEMS TO BE SOLVED BY THE INVENTION

However, the polyamides of Patent Document 1 and Patent Document 2 have a problem that although heat-resisting properties are improved, flexibility properties or rubber elastic properties are not sufficiently improved.

The present invention is intended to solve the above-described problems, and an object of the present invention is to provide a polyamide sufficiently superior in all of heat-resisting properties, flexibility properties, and rubber elastic properties.

SOLUTIONS TO THE PROBLEMS

The present inventors have found that the above object is achieved by reacting an aromatic dicarboxylic acid (C) having 12 or less carbon atoms with an aliphatic diamine (D) having 12 or less carbon atoms to obtain a reaction product, and then reacting the reaction product with an aliphatic dicarboxylic acid (A) having 18 or more carbon atoms and an aliphatic diamine (B) having 18 or more carbon atoms to polymerize, and have reached the present invention.

The gists of the present invention are as follows.

<1> A polyamide comprising a unit comprised of an aliphatic dicarboxylic acid (A) having 18 or more carbon atoms, a unit comprised of an aliphatic diamine (B) having 18 or more carbon atoms, a unit comprised of an aromatic dicarboxylic acid (C) having 12 or less carbon atoms and a unit comprised of an aliphatic diamine (D) having 12 or less carbon atoms, wherein the polyamide has a melting point of 240°C or more, a crystalline melting enthalpy of 20 J/g or more and an elongation recovery rate of 50 % or more in a hysteresis test.

<2> The polyamide according to <1>, wherein the aliphatic dicarboxylic acid (A) having 18 or more carbon atoms is a dimer acid.

<3> The polyamide according to <1> or <2>, wherein the aliphatic diamine (B) having 18 or more carbon atoms is a dimer diamine.

<4> The polyamide according to any one of <1> to <3>, wherein the aromatic dicarboxylic acid (C) having 12 or less carbon atoms is terephthalic acid.

<5> The polyamide according to any one of <1> to <4>, wherein the aliphatic diamine (D) having 12 or less carbon atoms is 1,10-decanediamine.

<6> The polyamide according to any one of <1> to <5>, wherein a total content of the unit comprised of the aliphatic dicarboxylic acid (A) having 18 or more carbon atoms and the unit comprised of the aliphatic diamine (B) having 18 or more carbon atoms is 10 to 90% by mass relative to all monomer components constituting the polyamide.

<7> The polyamide according to any one of <1> to <6>, wherein a total content of the unit comprised of the aliphatic dicarboxylic acid (A) having 18 or more carbon atoms and the unit comprised of the aliphatic diamine (B) having 18 or more carbon atoms is 20 to 80% by mass relative to all monomer components constituting the polyamide.

<8> The polyamide according to any one of <1> to <7>, wherein

the aliphatic dicarboxylic acid (A) having 18 or more carbon atoms has 30 to 40 of carbon atoms,
the aliphatic diamine (B) having 18 or more carbon atoms has 30 to 40 of carbon atoms,
the aromatic dicarboxylic acid (C) having 12 or less carbon atoms has 6 to 12 of carbon atoms, and
the aliphatic diamine (D) having 12 or less carbon atoms has 6 to 12 of carbon atoms.

<9> The polyamide according to any one of <1> to <8>, wherein

a content of the unit comprised of the aliphatic dicarboxylic acid (A) having 18 or more carbon atoms is 3 to 45% by mass relative to all monomer components constituting the polyamide,
a content of the unit comprised of the aliphatic diamine (B) having 18 or more carbon atoms is 3 to 45% by mass relative to all monomer components constituting the polyamide,
a content of the unit comprised of the aromatic dicarboxylic acid (C) having 12 or less carbon atoms is 3 to 45% by mass relative to all monomer components constituting the polyamide, and
a content of the unit comprised of the aliphatic diamine (D) having 12 or less carbon atoms is 3 to 52% by mass relative to all monomer components constituting the polyamide.

<10> A molded body comprising the polyamide according to any one of <1> to <9>.

<11> A film comprising the polyamide of any one of <1> to <9>.

<12> A method for producing a polyamide, the method comprising reacting

an aliphatic dicarboxylic acid (A) having 18 or more carbon atoms,
an aliphatic diamine (B) having 18 or more carbon atoms, and
a reaction product of an aromatic dicarboxylic acid (C) having 12 or less carbon atoms with an aliphatic diamine (D) having 12 or less carbon atoms
to polymerize.

<13> A method for producing a polyamide, the method comprising: reacting an aliphatic dicarboxylic acid (A) having 18 or more carbon atoms with an aliphatic diamine (B) having 18 or more carbon atoms in advance, and then reacting a reaction product of an aromatic dicarboxylic acid (C) having 12 or less carbon atoms with an aliphatic diamine (D) having 12 or less carbon atoms to polymerize.

<14> The method for producing a polyamide according to <12> or <13>, wherein the polyamide according to any one of <1> to <9> is produced.

EFFECTS OF THE INVENTION

According to the present invention, it is possible to provide a polyamide superior in all of heat-resisting properties, flexibility properties, and rubber elastic properties.

The polyamide or film of the present invention can exhibit superior flexibility properties and rubber elastic properties because a hard segment and a soft segment are formed therein.

BRIEF DESCRIPTION OF THE DRAWINGS

[Fig. 1A] Fig. 1A is a diagram showing a hysteresis curve of Example 1.
[Fig. 1B] Fig. 1B is a diagram showing a hysteresis curve of Example 6.

[Fig. 2] Fig. 2 is a diagram showing a hysteresis curve of Comparative Example 1.
[Fig. 3] Fig. 3 is a schematic diagram showing a hysteresis curve for explaining a method of calculating a hysteresis loss rate.

EMBODIMENTS OF THE INVENTION

The polyamide of the present invention comprises a unit comprised of an aliphatic dicarboxylic acid (A) having 18 or more carbon atoms
(hereinafter sometimes referred to as component (A)), a unit comprised of an aliphatic diamine (B) having 18 or more carbon atoms (hereinafter sometimes referred to as component (B)), a unit comprised of an aromatic dicarboxylic acid (C) having 12 or less carbon atoms (hereinafter sometimes referred to as component (C)), and a unit comprised of an aliphatic diamine (D) having 12 or less carbon atoms (hereinafter sometimes referred to as component (D)). The components (A) to (D) are contained as monomer components (or monomer residues) in the polyamide. Therefore, the "unit comprised of an aliphatic dicarboxylic acid (A) having 18 or more carbon atoms" may be simply expressed as "aliphatic dicarboxylic acid (A) monomer having 18 or more carbon atoms" or a residue thereof. The "unit comprised of an aliphatic diamine (B) having 18 or more carbon atoms" may be simply expressed as "aliphatic diamine (B) monomer having 18 or more carbon atoms" or a residue thereof. The "unit comprised of an aromatic dicarboxylic acid (C) having 12 or less carbon atoms" may be simply expressed as "aromatic dicarboxylic acid (C) monomer having 12 or less carbon atoms" or a residue thereof. The "unit comprised of an aliphatic diamine (D) having 12 or less carbon atoms" may be simply expressed as "aliphatic diamine (D) monomer having 12 or less carbon atoms" or a residue thereof.

An aliphatic dicarboxylic acid entirely, except the carboxyl groups, comprising a hydrocarbon is preferable as the aliphatic dicarboxylic acid (A) having 18 or more carbon atoms to be used in the polyamide of the present invention, and examples thereof include hexadecanedicarboxylic acid (18 carbon atoms), octadecanedicarboxylic acid (20 carbon atoms), and dimer acid (36 carbon atoms). Among them, aliphatic dicarboxylic acids having 20 or more carbon atoms are preferable because flexibility properties are thereby enhanced, and a dimer acid is more preferable. The dimer acid may be, for example, one obtained through addition reaction of two molecules selected from unsaturated fatty acids such as oleic acid and linoleic acid. The two molecules may be the same kind of molecules or different kinds of molecules. The dimer acid may be a dicarboxylic acid having an unsaturated bond, but the dimer acid is preferably a dicarboxylic acid in which all bonds thereof are saturated bonds due to a hydrogenation because the dicarboxylic acid is less prone to color. As the component (A), one of the above may be used singly, or two or more thereof may be used in combination.

The number of the carbon atoms of the component (A) is preferably 20 to 40, more preferably 30 to 40, and still more preferably 34 to 38 from the viewpoint of further improving the heat-resisting properties, flexibility properties, and rubber elastic properties of the polyamide and a film containing the polyamide.

The content of the component (A) is preferably 3 to 45% by mass, more preferably 5 to 45% by mass, particularly preferably 10 to 45% by mass, and further preferably 10 to 40% by mass from the viewpoint of further improving the heat-resisting properties, flexibility properties, and rubber elastic properties of the polyamide and a film containing the polyamide. The content is a content of the residue of the component (A), and is a ratio relative to all monomer components constituting the polyamide (or the total amount of the residues of the monomer components). When the polyamide contains two or more kinds of the component (A), it is just required that the total amount thereof is within the above range.

An aliphatic dicarboxylic acid entirely, except amino groups, comprising a hydrocarbon is preferable as the aliphatic diamine (B) having 18 or more carbon atoms to be used in the polyamide of the present invention, and examples thereof include octadecanediamine (18 carbon atoms), eicosanediamine (20 carbon atoms), and dimer diamine (36 carbon atoms). Among them, a dimer diamine is preferable. Using the dimer diamine can effectively improve the flexibility properties of the entire polymer even with a resin composition relatively less than other monomers. Usually, the dimer diamine is produced by reacting a dimer acid with ammonia, then dehydrating, nitrifying, and reducing. The dimer diamine may be a diamine having an unsaturated bond, but is preferably a diamine in which all bonds thereof are saturated bonds due to a hydrogenation because the diamine is less prone to color. As the component (B), one of the above may be used singly, or two or more thereof may be used in combination.

The number of the carbon atoms in the component (B) is preferably 20 to 40, more preferably 30 to 40, and still more preferably 34 to 38 from the viewpoint of further improving the heat-resisting properties, flexibility properties, and rubber elastic properties of the polyamide and a film containing the polyamide.

The content of the component (B) is preferably 3 to 45% by mass, more preferably 5 to 45% by mass, particularly preferably 10 to 45% by mass, and further preferably 10 to 40% by mass from the viewpoint of further improving the heat-resisting properties, flexibility properties, and rubber elastic properties of the polyamide and a film containing the polyamide. The content is a content of the residue of the component (B), and is a ratio relative to all monomer components constituting the polyamide (or the total amount of the residues of the monomer components). When the polyamide contains two or more kinds of the component (B), it is just required that the total amount thereof is within the above range.

Examples of the aromatic dicarboxylic acid (C) having 12 or less carbon atoms to be used in the polyamide of the present invention include terephthalic acid (8 carbon atoms), isophthalic acid (8 carbon atoms), and orthophthalic acid (8 carbon atoms). Among them, aromatic dicarboxylic acids having 8 or more carbon atoms are preferable because heat-resisting properties, flexibility properties, and rubber elastic properties are thereby easily further improved, and terephthalic acid is more preferable. As the component (C), one of the above may be used singly, or two or more thereof may be used in combination.

The number of the carbon atoms in the component (C) is preferably 4 to 12, more preferably 6 to 12, and still more preferably 6 to 10 from the viewpoint of further improving the heat-resisting properties, flexibility properties, and rubber elastic properties of the polyamide and a film containing the polyamide.

The content of the component (C) is preferably 3 to 45% by mass, more preferably 5 to 45% by mass, particularly preferably 5 to 40% by mass, and further preferably 8 to 35% by mass from the viewpoint of further improving the heat-resisting properties, flexibility properties, and rubber elastic properties of the polyamide and a film containing the polyamide. The content is a content of the residue of the component (C), and is a ratio relative to all monomer components constituting the polyamide (or the total amount of the residues of the monomer components). When the polyamide contains two or more kinds of the component (C), it is just required that the total amount thereof is within the above range.

Examples of the aliphatic diamine (D) having 12 or less carbon atoms to be used in the polyamide of the present invention include 1,12-dodecanediamine (12 carbon atoms), 1,10-decanediamine (10 carbon atoms), 1,9-nonanediamine (9 carbon atoms), 1,8-octanediamine (8 carbon atoms), and 1,6-hexanediamine (6 carbon atoms). Among them, diamines having 6 or more carbon atoms are preferable because heat-resisting properties, flexibility properties, and rubber elastic properties are thereby easily further improved, diamines having 8 or more carbon atoms are more preferable, and 1,10-decanediamine is still more preferable. As (D), one of the above may be used singly, or two or more thereof may be used in combination.

The number of the carbon atoms of the component (D) is preferably 4 to 12, more preferably 6 to 12, and still more preferably 8 to 12 from the viewpoint of further improving the heat-resisting properties, flexibility properties, and rubber elastic properties of the polyamide and the film containing the polyamide.

The content of the component (D) is preferably 3 to 52% by mass, more preferably 5 to 50% by mass, particularly preferably 5 to 40% by mass, and further preferably 10 to 40% by mass from the viewpoint of further improving the heat-resisting properties, flexibility properties, and rubber elastic properties of the polyamide and a film containing the polyamide. The content is a content of the residue of the component (D), and is a ratio relative to all monomer components constituting the polyamide (or the total amount of the residues of the monomer components). When the polyamide contains two or more kinds of the component (D), it is just required that the total amount thereof is within the above range.

In the polyamide of the present invention, it is presumed that the unit comprised of the aliphatic dicarboxylic acid (A) having 18 or more carbon atoms and the unit comprised of the aliphatic diamine (B) having 18 or more carbon atoms form soft segments, and the unit comprised of the aromatic dicarboxylic acid (C) having 12 or less carbon atoms and the unit comprised of the aliphatic diamine (D) having 12 or less carbon atoms form hard segments. It is considered that due to the formation of such a phase separation structure of the hard segment and the soft segment, the polyamide is more sufficiently superior in flexibility properties and rubber elastic properties while having superior heat-resisting properties. Specifically, in the polyamide of the present invention, since the hard segment serves as a crosslinking point of rubber and the soft segment can freely stretch and contract, flexibility properties and rubber elastic properties (especially, rubber elastic properties) are exhibited while heat-resisting properties are secured. Examples of the combination of the components (C) and (D) include terephthalic acid and butanediamine, terephthalic acid and 1,9-nonanediamine, terephthalic acid and 1,10-decanediamine, and terephthalic acid and 1,12-dodecanediamine. Among these, terephthalic acid and 1,10-decanediamine are preferable. Owing to using terephthalic acid and 1,10-decanediamine, the hard segment tends to be a highly crystalline segment, so that the formation of a phase separation structure of the hard segment and the soft segment is promoted, and more sufficiently superior flexibility properties and rubber elastic properties are exhibited. The term "rubber" is used in a concept of a substance that is locally deformed by an external force but returns to its original shape when the force is removed.

The total content of the unit comprised of the aliphatic dicarboxylic acid (A) having 18 or more carbon atoms and the unit comprised of the aliphatic diamine (B) having 18 or more carbon atoms in the polyamide is preferably 10 to 90% by mass, more preferably 15 to 80% by mass, particularly preferably 20 to 80% by mass, and further preferably 30 to 75% by mass from the viewpoint of further improving the heat-resisting properties, flexibility properties, and rubber elastic properties of the polyamide and a film containing the polyamide. The total content is a total content of the residue of the component (A) and the residue of the component (B), and is a ratio relative to all the monomer components constituting the polyamide (or the total amount of those residues).

In the polyamide of the present invention, it is preferable not to use a polyether or a polyester which is easily decomposed during polymerization. Examples of such a polyether include polyoxyethylene glycol, polyoxypropylene glycol, polyoxytetramethylene glycol, and polyoxyethylene-polyoxypropylene glycol. Examples of the polyester include polyethylene adipate, polytetramethylene adipate, and polyethylene sebacate. When a polyether or a polyester is used, decomposition may occur if the polymerization temperature is high.

The total content of the polyether component and the polyester component is preferably 2% by mass or less, more preferably 1% by mass or less, and particularly preferably 0.1% by mass or less from the viewpoint of further improving the heat-resisting properties, flexibility properties, and rubber elastic properties of the polyamide and a film containing the polyamide. The lower limit value of the total content range is usually 0% by mass. The total content is a content of the residues of the polyether component and the polyester component, and is a ratio relative to all monomer components constituting the polyamide (or the total amount of the residues thereof). The polyether component and the polyester component are components that constitute a part of the polyamide by covalent bonding with the polyamide, and are not merely blended with the polyamide.

The polyamide of the present invention may contain an end-capping agent for adjusting the degree of polymerization, controlling the decomposition and coloring of products, and the like. Examples of the end-capping agent include monocarboxylic acids such as acetic acid, lauric acid, benzoic acid, and stearic acid, and monoamines such as octylamine, cyclohexylamine, aniline, and stearylamine. As the end-capping agent, one of the above may be used singly, or two or more thereof may be used in combination. The content of the end-capping agent is not particularly limited, but is usually 0 to 10 mol% relative to the total molar amount of the dicarboxylic acid and the diamine.

The polyamide of the present invention may contain an additive. Examples of the additive include fibrous reinforcing materials such as glass fiber and carbon fiber; fillers such as talc, swellable clay minerals, silica, alumina, glass beads, and graphite; pigments such as titanium oxide and carbon black; antioxidants; antistatic agents; flame retardants; and flame retardant aids. The additive may be contained during polymerization, or may be incorporated by melt-kneading or the like after polymerization.

In the polyamide of the present invention, the melting point as an index of heat-resisting properties is required to be 240°C or more, and from the viewpoint of further improving the heat-resisting properties, flexibility properties, and rubber elastic properties of the polyamide and a film containing the polyamide, the melting point is preferably 270°C or more, and more preferably 300°C or more. When the melting point is excessively low, heat-resisting properties are deteriorated. The melting point is usually 400°C or less (especially 350°C or less).

In the polyamide of the present invention, the crystalline melting enthalpy as an index of the crystallinity of a hard segment is preferably 20 J/g or more, more preferably 23 J/g or more, and still more preferably 25 J/g or more from the viewpoint of further improving the heat-resisting properties, flexibility properties, and rubber elastic properties of the polyamide and a film containing the polyamide. As the crystallinity of the hard segment is higher, the formation of the phase separation structure of the hard segment and the soft segment is promoted, and flexibility properties and rubber elastic properties are improved. If the crystalline melting enthalpy is excessively low, flexibility properties and/or rubber elastic properties are deteriorated. The crystalline melting enthalpy is usually 120 J/g or less (especially 90 J/g or less).

The polyamide of the present invention particularly has sufficiently more superior flexibility properties and rubber elastic properties than the random type polyamide described later.

In the polyamide of the present invention, the elongation recovery rate as an index of flexibility properties needs to be 50% or more, and from the viewpoint of further improving the heat-resisting properties, flexibility properties, and rubber elastic properties of the polyamide and a film containing the polyamide, the elongation recovery rate is preferably 55% or more. If the elongation recovery rate is excessively low, flexibility properties are deteriorated. The elongation recovery rate is usually 100% or less (especially 90% or less).

It is more effective to express the elongation recovery rate of the polyamide of the present invention in comparison with a conventional polyamide having the same monomer composition as that of the polyamide of the present invention and including the monomer components (the components (A) to (D)) randomly arranged (such a conventional polyamide is herein sometimes referred to simply as random type polyamide). For example, the elongation recovery rate of the polyamide of the present invention is larger than the elongation recovery rate of the random type polyamide. The increase rate (%) of the elongation recovery rate of the polyamide of the present invention is usually 10% or more, preferably 20% or more, and more preferably 40% or more based on the elongation recovery rate of the random type polyamide. The increase rate of the elongation recovery rate is usually 300% or less (especially, 200% or less). The increase rate of the elongation recovery rate is a value (%) represented by "$\{(X1 - Y1)/Y1\} \times 100$" where the elongation recovery rate of the polyamide of the present invention is represented by X1 and the elongation recovery rate of the random type polyamide is represented by Y1. The random type polyamide is a polyamide obtained by a method which is same as the method for producing the polyamide of the present invention except that raw materials (all monomer components) are charged together and polymerized.

In the polyamide of the present invention, the Shore D hardness serving as an index of flexibility properties is preferably 75 or less, and more preferably 65 or less. The Shore D hardness is usually 1 or more (especially 2 or more).

Since the Shore D hardness of the polyamide of the present invention depends also on the monomer composition of the polyamide, it is more effective to express the Shore D hardness in comparison with a random type polyamide having the same monomer composition as that of the polyamide of the present invention. For example, the Shore D hardness of the polyamide of the present invention is smaller than the Shore D hardness of the random type polyamide. The decrease rate (%) of the Shore D hardness of the polyamide of the present invention is usually 2% or more, preferably 5% or more, and more preferably 6.5% or more based on the Shore D hardness of the random type polyamide. The decrease rate of the Shore D hardness is usually 70% or less (especially 50% or less). The decrease rate of the Shore D hardness is a value (%) represented by "$\{(Y2 - X2)/Y2\} \times 100$" where the Shore D hardness of the polyamide of the present invention is represented by X2 and the Shore D hardness of the random type polyamide is represented by Y2.

In the polyamide of the present invention, the smaller the hysteresis loss rate is, the higher the rubber elastic properties are. Compared with conventional polyamides in which monomers are randomly polymerized, the polyamide of the present invention has a lower hysteresis loss rate because the hard segment and the soft segment in the polymer are controlled in chain length. In the polyamide of the present invention, the hysteresis loss rate is preferably 90% or less, more preferably 85% or less, and still more preferably 80% or less. The hysteresis loss rate is usually 10% or more (especially 30% or more).

Since the hysteresis loss rate of the polyamide of the present invention depends also on the monomer composition of the polyamide, it is more effective to express the hysteresis loss rate in comparison with a random type polyamide having the same monomer composition as that of the polyamide of the present invention. For example, the hysteresis loss rate of the polyamide of the present invention is smaller than the hysteresis loss rate of the random type polyamide. The decrease rate (%) of the hysteresis loss rate of the polyamide of the present invention is usually 2% or more, preferably 4% or more, and more preferably 5.5% or more based on the hysteresis loss rate of the random type polyamide. The decrease rate of the hysteresis loss rate is usually 40% or less (especially 30% or less). The decrease rate of the hysteresis loss rate is a value (%) represented by "$\{(Y3 - X3)/Y3\} \times 100$" where the hysteresis loss rate of the polyamide of the present invention is represented by X3 and the hysteresis loss rate of the random type polyamide is represented by Y3.

The polyamide of the present invention can be obtained by reacting the component (C) and the component (D) separately from the component (A) and the component (B). For example, the polyamide of the present invention can be obtained by reacting an aromatic dicarboxylic acid (C) having 12 or less carbon atoms with an aliphatic diamine (D) having 12 or less carbon atoms to obtain a reaction product, and then reacting the reaction product with an aliphatic dicarboxylic acid (A) having 18 or more carbon atoms and an aliphatic diamine (B) having 18 or more carbon atoms to polymerize. Specifically, the polyamide of the present invention can be obtained by reacting

the component (A),
the component (B), and
a reaction product of the component (C) and the component (D)
to polymerize.

In such a production method, the component (A) and the component (B) may be used in a state of not having reacted with each other, or may be used in a state of having reacted with each other (that is, in the form of a reaction products thereof. For example, the polyamide of the present invention may be obtained by reacting the component (A) and the component (B) in advance, and then reacting and polymerizing the obtained reaction product of the component (A) and the component (B) with a reaction product of the component (C) and the component (D). Specifically, the polyamide of the present invention may be obtained by reacting

a reaction product of the component (A) and the component (B) with
a reaction product of component (C) and component (D)
to polymerize.

The component (A) and the component (B) are preferably used in a mutually reacted state (that is, in the form of a reaction product thereof) from the viewpoint of further improving the heat-resisting properties, flexibility properties, and rubber elastic properties of the polyamide and a film containing the polyamide.

In the present invention, the polymerization conducted as described above affords a polyamide composed of a hard segment comprising the components (C) and (D) and a soft segment comprising the components (A) and (B) unlike conventional polyamides in which the components (A) to (D) are randomly polymerized. Whereas conventional polyamides are "random type polyamides", the polyamide of the present invention can be referred to as a "block type polyamide" from the viewpoint of the inclusion of the hard segment and the soft segment.

In the production method of the present invention, the chain length of the resulting reaction product can be controlled by adjusting the monomer ratio [(C)/(D)] of the aromatic dicarboxylic acid (C) having 12 or less carbon atoms and the aliphatic diamine (D) having 12 or less carbon atoms to be used, and as a result, the flexibility properties and rubber elastic properties of the resulting polyamide can be controlled. The molar ratio [(C)/(D)] is preferably set to 45/55 to 60/40, and more preferably set to 45/55 to 55/45 because flexibility properties and rubber elastic properties are more sufficiently improved.

In the process of producing the polyamide of the present invention, the method for producing a reaction product comprising the aromatic dicarboxylic acid (C) having 12 or less carbon atoms and the aliphatic diamine (D) having 12 or less carbon atoms (hereinafter sometimes simply referred to as "method X for producing reaction product") is not particularly limited, and examples thereof include a method in which the components (C) and (D) are each heated to a temperature equal to or higher than the melting point of the component (D) and equal to or lower than the melting point of the component (C) and the component (D) is added such that the powder state of the component (C) is maintained. For example, when terephthalic acid and 1,10-decanediamine are used as the components (C) and (D), respectively, the heating temperature may be 100 to 240°C (especially 140 to 200°C). The addition of the component (D) is preferably carried out continuously and, for example, is preferably carried out over 1 to 10 hours (especially 1 to 5 hours).

The reaction product of the component (C) and the component (D) may have the form of a salt of the component (C) and the component (D), may have the form of a condensate (or an oligomer or a prepolymer) thereof, or may have a composite form thereof.

When the component (A) and the component (B) are reacted in advance, the method of reacting the aliphatic dicarboxylic acid (A) having 18 or more carbon atoms with the aliphatic diamine (B) having 18 or more carbon atoms is not particularly limited, and examples thereof include a method involving reacting them at a temperature of 80 to 150°C (especially 100 to 150°C) for 0.5 to 3 hours.

Like the reaction product of the component (C) and the component (D), the reaction product of the component (A) and the component (B) may also have a salt form, a condensate (or oligomer or prepolymer) form thereof, or a composite form thereof.

In the process of producing the polyamide of the present invention, the polymerization method is not particularly limited, and examples thereof include a method of polymerizing the raw materials at a temperature equal to or lower than the melting point of the hard segment polymer (that is, the polyamide composed only of the components (C) and (D) constituting the hard segment) (preferably, a temperature lower than the melting point). Specifically, the polymerization is carried out by heating to a temperature equal to or lower than the melting point of the hard segment polymer (that is, the polyamide composed only of components (C) and (D) constituting the hard segment) and maintaining the temperature under a nitrogen stream while removing condensed water to the outside of the system. By performing polymerization in this way, the polymerization can be carried out in a state where the hard segment is not melted and only the soft segment is melted. The method of performing polymerization at a temperature equal to or lower than the melting point of the hard segment polymer is particularly effective in the polymerization of a polyamide having a high melting point of 280°C or more, which is likely to be decomposed due to a high polymerization temperature.

The "melting point of a hard segment polymer" is a melting point of a polyamide obtained by sufficiently polymerizing only the components (C) and (D) to constitute the hard segment as monomer components. The "melting point of a hard segment polymer" may be, for example, a melting point of a polyamide obtained by sufficiently polymerizing only the components (C) and (D) as monomer components by the method described in WO 2013/042541 A. Specifically, the "melting point of a hard segment polymer" is a melting point of a polyamide (hard segment polymer) obtained by a method comprising a step (i) of obtaining a reaction product from the components (C) and (D) and a step (ii) of polymerizing the reaction product obtained. In the process of producing the hard segment polymer, in the step (i), the reaction product can be obtained by heating the components (C) and (D) to a temperature equal to or higher than the melting point of the component (D) and equal to or lower than the melting point of the component (C), and adding the component (D) such that a powder state of the component (C) is maintained. In the step (i), for example, when terephthalic acid and 1,10-decanediamine are used as the components (C) and (D), respectively, the heating temperature may be 100 to 240°C (preferably 140 to 200°C, and especially 170°C). The addition of the component (D) is preferably carried out continuously and, for example, is preferably carried out over 1 to 10 hours (preferably 1 to 5 hours, and especially 2.5 hours). In the process of producing the hard segment polymer, in the step (ii), the reaction product in a solid phase state obtained in the step (i) is sufficiently heated such that the solid phase state is maintained, and polymerization (namely, solid phase polymerization) is carried out. In the step (ii), for example, when terephthalic acid and 1,10-decanediamine are used as the components (C) and (D), respectively, the heating temperature (namely, the polymerization temperature) may be 220 to 300°C (preferably 240 to 280°C, and especially 260°C), and the heating time (namely, the polymerization time) may be 1 to 10 hours (preferably 3 to 7 hours, and especially 5 hours). The steps (i) and (ii) are preferably carried out in a stream of nitrogen inert gas or the like. For example, when terephthalic acid and 1,10-decanediamine are used as the components (C) and (D), respectively, the "melting point of a hard segment polymer" is usually 315°C.

Thus, in producing the polyamide of the present invention, for example, the following method can be employed. First, a polyamide (namely, a hard segment polymer) is obtained by sufficiently performing polymerization in the above steps (i) and (ii) using only the components (C) and (D) to constitute the polyamide. Next, the melting point of the polyamide obtained is measured. The method for measuring the melting point is not particularly limited, and the melting point can be measured with, for example, a differential scanning calorimeter. Thereafter, the component (C) and the component (D) are reacted with each other to afford a reaction product by the above-described method X for producing the reaction product, and then the reaction product is further reacted with the component (A) and the component (B) at a temperature equal to or less than the "melting point of a hard segment polymer" and polymerized, whereby the polyamide of the present invention can be produced. When a dimer acid, a dimer diamine, terephthalic acid, and 1,10-decanediamine are used as the components (A) to (D), respectively, the polymerization temperature may be 220 to 300°C (preferably 240 to 280°C, and especially 260°C). In this case, the polymerization time is not particularly limited as long as sufficient polymerization is carried out, and may be, for example, 1 to 10 hours (preferably 3 to 7 hours, and especially 5 hours).

In the production method of the present invention, a catalyst may be used, as necessary. Examples of the catalyst include phosphoric acid, phosphorous acid, hypophosphorous acid, and salts thereof. The content of the catalyst is not particularly limited, but is usually 0 to 2 mol% relative to the total molar amount of the dicarboxylic acid and the diamine.

In the production method of the present invention, an organic solvent or water may be added, as necessary.

In the production method of the present invention, the polymerization may be carried out in a sealed system or at normal pressure. In the case of polymerization in a sealed system, it is preferable to appropriately control the pressure because the pressure may increase due to volatilization of the monomers, generation of condensed water, or the like. On the other hand, when the boiling point of the monomers to be used is high and the monomers do not leave out of the system without pressurization, the polymerization can be carried out at normal pressure. For example, in the case of a combination of a dimer acid, a dimer diamine, terephthalic acid, and decanediamine, polymerization may be carried out at normal pressure.

In the production method of the present invention, it is preferable to perform polymerization in a nitrogen atmosphere or under vacuum in order to prevent oxidative degradation.

The polyamide polymerized may be extruded into a strand shape to form pellets, or may be hot-cut or underwater-cut to form pellets.

In the production method of the present invention, after the polymerization, solid phase polymerization may be carried out for the purpose of increasing the molecular weight. Solid phase polymerization is particularly effective when a high viscosity at the time of polymerization makes it difficult to perform the operation. The solid phase polymerization is preferably carried out by heating the resin composition at a temperature lower than the melting point of the resin composition for 30 minutes or more, more preferably 1 hour or more, under an inert gas flow or under reduced pressure. The melting point of the resin composition may be the same temperature as the "melting point of a hard segment polymer" described above.

The polyamide of the present invention can be formed into a molded body by an injection molding method, an extrusion molding method, a blow molding method, a sintering molding method, or the like. Among them, the injection molding method is preferable because of its great effect of improving mechanical properties and moldability. The injection molding machine is not particularly limited, and may be, for example, a screw-in-line type injection molding machine or a plunger type injection molding machine. The polyamide heat-melted in the cylinder of the injection molding machine is metered every shot, injected into a mold in a molten state, cooled and solidified in a prescribed shape, and then taken out as a molded body from the mold. The heater temperature during injection molding is preferably set equal to or higher than the melting point.

The molded body of the present invention only needs to comprise the polyamide of the present invention described above, and may further comprise another polymer. The content of the polyamide of the present invention in the molded body is usually 50% by mass or more, preferably 70% by mass or more, more preferably 90% by mass or more, and still more preferably 95% by mass or more relative to the total amount of the molded body.

When the polyamide of the present invention is heated and melted, it is preferable to use pellets sufficiently dried. If the amount of water contained is large, the pellets foam in the cylinder of the injection molding machine, and it may be difficult to obtain an optimal molded body. The moisture content of the pellet to be used for injection molding is preferably less than 0.3 parts by mass, and more preferably less than 0.1 parts by mass relative to 100 parts by mass of the polyamide.

The polyamide of the present invention can be used for automotive parts such as fuel tubes, brake pipes, intake and exhaust system parts, intake and exhaust system pipes, damping materials, and cooling pipes; electrical and electronic parts such as pipes, sheets, and connectors; gears; valves; oil pans; cooling fans; radiator tanks; cylinder heads; canisters; hoses; soles of sports shoes; medical catheters; band of wearable devices such as a smart watch; protection cases; industrial tubes; wire cables; binding bands; drone components; packings; deformed materials; injection molded bodies; monofilaments for 3D printer modeling and for fishing lines; fibers, and the like.

The polyamide of the present invention can be suitably used especially in the form of a film.

The film of the present invention only needs to comprise the polyamide of the present invention described above, and may further comprise another polymer. The content of the polyamide of the present invention in the film is usually 50% by mass or more, preferably 70% by mass or more, more preferably 90% by mass or more, and still more preferably 95% by mass or more relative to the total amount of the film.

The film of the present invention can be produced as an unstretched film by melt-mixing a material at 240 to 340°C for 3 to 15 minutes, then extruding the material into a sheet shape through a T-die, and bringing the extrudate into close contact with a drum controlled at a temperature of -10 to 80°C to cool. Furthermore, the unstretched film may be stretched. The obtained unstretched film can be used in an unstretched state, but in usual is often processed into a stretched film and then used. The stretching is preferably uniaxially or biaxially performed, and more preferably biaxially stretched. Examples of the stretching method include a simultaneous stretching method and a sequential stretching method.

One example of the simultaneous biaxial stretching method is a method in which an unstretched film is simultaneously biaxially stretched and then subjected to a heat-fixing treatment. The stretching is preferably carried out at 30 to 150°C and 1.5 to 5 times in both the transverse direction (hereinafter sometimes abbreviated as "TD") and the machine direction (hereinafter sometimes abbreviated as "MD"). In the heat-fixing treatment, it is preferable to perform a TD relaxation treatment at several % at 150 to 300°C for several seconds. Before simultaneous biaxial stretching is carried out, the film may be subjected to preliminary longitudinal stretching by about 1 to 1.2 times.

One example of the sequential biaxial stretching method is a method in which an unstretched film is subjected to a heating treatment such as roll heating or infrared heating, then longitudinally stretched, and subsequently continuously subjected to lateral stretching and a heat-fixing treatment. The longitudinal stretching is preferably carried out 1.5 to 5 times at 30 to 150°C. The lateral stretching is preferably carried out at 30 to 150°C as in the case of longitudinal stretching. The lateral stretching is preferably 1.5 times or more. The heat-fixing treatment is preferably carried out at 150 to 300°C for several seconds with a relaxation in TD of several %.

In the apparatus for producing a film, the surfaces of the cylinder, the melting section and the metering section of the barrel, the single pipe, the filter, the T-die, and the like preferably have been subjected to treatment for reducing the roughness of the surfaces in order to prevent the resin from staying. Examples of the method for reducing the surface roughness include a method of modifying with a substance having a low polarity. Alternatively, silicon nitride or diamond-like carbon may be vapor-deposited on the surfaces.

Examples of the method for stretching the film include a flat sequential biaxial stretching method, a flat simultaneous biaxial stretching method, and a tubular method. Among them, it is preferable to employ the flat simultaneous biaxial stretching method from the viewpoint of improving the thickness accuracy of the film and making the MD physical properties of the film uniform.

Examples of the stretching apparatus for employing the flat simultaneous biaxial stretching method include a screw type tenter, a pantograph type tenter, and a linear motor driven clip type tenter.

Examples of the heat treatment method after stretching include such known methods as a method of blowing hot air, a method of applying infrared rays, and a method of applying microwaves. Among them, the method of blowing hot air is preferable because heating can thereby be carried out uniformly and accurately.

The film of the present invention preferably contains a heat stabilizer in order to enhance thermal stability during film formation, prevent deterioration of strength and elongation of the film, and prevent degradation of the film due to oxidation, decomposition, or the like during use. Examples of the heat stabilizer includes, for example, a hindered phenol heat stabilizer, a hindered amine heat stabilizer, a phosphorus-based heat stabilizer, a sulfur-based heat stabilizer, and a bifunctional heat stabilizer.

Examples of the hindered phenol heat stabilizer include Irganox 1010 (registered trademark) (pentaerythritol tetrakis[3-(3,5-di-tert-butyl-4-hydroxyphenyl)propionate], manufactured by BASF Japan Ltd.), Irganox 1076 (registered trademark) (octadecyl-3-(3,5-di-tert-butyl-4-hydroxyphenyl)propionate, manufactured by BASF Japan Ltd.), Cyanox1790 (registered trademark) (1, 3, 5-tris(4-tert-butyl-3-hydroxy-2,6-dimethylbenzyl)isocyanurate, manufactured by Solvay S. A.), Irganox1098 (registered trademark) (N,N'-(hexane-1,6-diyl)bis[3-(3,5-di-tert-butyl-4-hydroxyphenyl)propionamid e], manufactured by BASF Japan Ltd.), Sumilizer GA-80 (registered trademark) (3,9-bis[2-{3-(3-tert-butyl-4-hydroxy-5-methylphenyl)propionyloxy}-1,1-dimet hylethyl]-2,4,8,10-tetraoxaspiro[5.5]undecane, manufactured by Sumitomo Chemical Co., Ltd.).

Examples of the hindered amine heat stabilizer include Nylostab S-EED (registered trademark) (N,N'-bis-(2,2,6,6-tetramethyl-4-piperidinyl)-1,3-benzenedicarboxyamide, manufactured by Clariant Japan, K. K.).

Examples of the phosphorus-based heat stabilizer include Irgafos 168 (registered trademark) (tris(2,4-di-tert-butylphenyl)phosphite, manufactured by BASF Japan Ltd.), Irgafos 12 (registered trademark) (tris[2-[[2,4,8,10-tetra-tert-butyldibenzo[d,f][1,3,2]dioxaphosphepin-6-yl]oxy] ethyl]amine), manufactured by BASF Japan Ltd.), Irgafos38 (registered trademark) (bis(2,4-di-tert-butyl)-6-methylphenyl)ethylphosphite), manufactured by BASF Japan Ltd.), ADK STAB 329K (registered trademark) (tris(mono-dinonylphenyl)phosphite, manufactured by ADEKA CORPORATION), ADK STAB PEP36 (registered trademark) (bis(2,6-di-tert-butyl-4-methylphenyl)pentaerythritol-di-phosphite, manufactured by ADEKA CORPORATION), Hostanox P-EPQ (registered trademark) (tetrakis(2,4-di-tert-butylphenyl)-4,4'-biphenyldiphosphonite, manufactured by Clariant AG), GSY-P101 (registered trademark) (tetrakis(2,4-di-tert-butyl-5-methylphenyl)-4,4'-biphenylenediphosphonite, manufactured by Sakai Chemical Industry Co., Ltd.), Sumilizer GP (registered trademark) (6-[3-(3-tert-butyl-4-hydroxy-5-methylphenyl)propoxy]-2,4,8,10-tetra-tert-bu tyldibenzo[d,f][1,3,2]-dioxaphosphepin, manufactured by Sumitomo Chemical Co., Ltd.).

Examples of the sulfur-based heat stabilizer include DSTP "Yoshitomi" (registered trademark) (chemical formula name: distearyl thiodipropionate, manufactured by Mitsubishi Chemical Corporation) and Seenox 412S (registered trademark) (pentaerythritol tetrakis-(3-dodecylthiopropionate), manufactured by SHIPRO KASEI KAISHA LTD.).

Examples of the bifunctional heat stabilizer include Sumilizer GM (registered trademark) (2-tert-butyl-6-(3-tert-butyl-2-hydroxy-5-methylbenzyl)-4-methylphenyl acrylate, manufactured by Sumitomo Chemical Co., Ltd.) and Sumilizer GS (registered trademark) (2-[1-(2-hydroxy-3,5-di-tert-pentylphenyl)ethyl]-4,6-di-tert-pentylphenyl acrylate, manufactured by Sumitomo Chemical Co., Ltd.).

From the viewpoint of preventing deterioration of film strength, a hindered phenol heat stabilizer is preferable. The thermal decomposition temperature of the hindered phenol heat stabilizer is preferably 320°C or more, and more preferably 350°C or more. Examples of the hindered phenol heat stabilizer having a thermal decomposition temperature of 320°C or more include Sumilizer GA-80. The hindered phenol heat stabilizer can prevent deterioration of film strength when it has an amide linkage. Examples of the hindered phenol heat stabilizer having an amide linkage include Irganox 1098. In addition, using a bifunctional heat stabilizer in combination with the hindered phenol heat stabilizer can further reduce the deterioration of film strength.

These heat stabilizers may be used singly, or two or more of them may be used in combination. For example, when a hindered phenol heat stabilizer and a phosphorus-based heat stabilizer are used in combination, it is possible to prevent pressure rise at a filter for raw material filtration during film formation and to prevent deterioration of film strength. When a hindered phenol heat stabilizer, a phosphorus-based heat stabilizer, and a bifunctional heat stabilizer are used in combination, it is possible to prevent pressure rise at a filter for raw material filtration during film formation, and it is possible to further reduce deterioration of film strength.

As a combination of a hindered phenol heat stabilizer and a phosphorus-based heat stabilizer, a combination of Sumilizer GA-80 or Irganox 1098 and Hostanox P-EPQ or GSY-P101 is preferable. As a combination of a hindered phenol heat stabilizer, a phosphorus-based heat stabilizer, and a bifunctional heat stabilizer, a combination of Sumilizer GA-80 or Irganox 1098, Hostanox P-EPQ or GSY-P101, and Sumilizer GS is preferable, and a combination of Sumilizer GA-80, GSY-P101, and Sumilizer GS is more preferable.

The content of the heat stabilizer in the film of the present invention is preferably 0.01 to 2 parts by mass, and more preferably 0.04 to 1 parts by mass relative to 100 parts by mass of the polyamide (A). When the content of the heat stabilizer is set to 0.01 to 2 parts by mass, thermal decomposition can be more efficiently inhibited. When two or more heat stabilizers are used in combination, it is preferable that both the individual content of each heat stabilizer and the total content of the heat stabilizers fall within the above range.

In the film of the present invention, lubricant particles may be contained in order to achieve improved slipperiness. Examples of the lubricant particles include inorganic particles such as silica, alumina, titanium dioxide, calcium carbonate, kaolin, and barium sulfate, and organic fine particles such as acrylic resin particles, melamine resin particles, silicone resin particles, and crosslinked polystyrene particles.

The film of the present invention may contain various additives as necessary as long as the effects of the present invention are not impaired. Examples of the additive include colorants such as pigments and dyes, color inhibitors, antioxidants different from the above heat stabilizers, weather resistance improvers, flame retardants, plasticizers, release agents, strengthening agents, and modifications, antistatic agents, UV absorbers, anti-fogging agents, and various polymers. Examples of the pigment include titanium oxide. Examples of the weather resistance improver include benzotriazole-based compounds. Examples of the flame retardant include brominated flame retardants and phosphorus-based flame retardants. Examples of the strengthening agent include talc. It is noted that the various additives may be added at any stage in the production of the film.

The film of the present invention may be subjected to a treatment for improving the adhesiveness of the surface thereof, as necessary. Examples of the method for improving the adhesiveness include corona treatment, plasma treatment, acid treatment, and flame treatment.

A surface of the film of the present invention may be coated with various coating agents in order to impart such functions as easy adhesion, an antistatic property, releasability, and a gas barrier property.

The stretched film of the present invention may be laminated with an inorganic substance such as a metal or an oxide thereof, another type of polymer, paper, woven fabric, nonwoven fabric, wood, and the like.

The film of the present invention is superior in heat-resisting property, and the melting point serving as an index of heat-resisting properties needs to be 240°C or more, and is preferably 250°C or more, more preferably 270°C or more, and still more preferably 300°C or more.

In addition, the elastic modulus serving as an index of the flexibility properties of the film of the present invention is preferably 2500 MPa or less, more preferably 2000 MPa or less, and still more preferably 1500 MPa or less.

In addition, the film of the present invention has a low dielectric dissipation factor and a low dielectric constant, and is superior in dielectric property, and is also superior in insulating property.

The film obtained may be a sheet, or may be wound around a winding roll to processed into the form of a film roll. From the viewpoint of productivity when used for various applications, it is preferable to process the film into the form of a film roll. In the case of having been processed into a film roll, the film roll may have been slit to have a desired width.

The film obtained as described above is superior in all of heat-resisting properties, flexibility properties, and rubber elastic properties. Thus, the film of the present invention can be suitably used as pharmaceutical packaging materials; packaging materials for foods such as retort foods; packaging materials for electronic components such as semiconductor packages; electrical insulating materials for motors, transformers, cables, electric wires, multilayer printed circuit boards, etc.; dielectric materials for capacitor applications, etc.; materials for magnetic tapes such as cassette tapes, data storage magnetic tapes for digital data storage, and video tapes; protective materials for solar cell substrates, liquid crystal panels, conductive films, glass, digital signages, other display devices, etc.; electronic substrate materials such as LED mounted substrates, organic EL substrates, flexible printed circuits, flexible flat cables, flexible antennas, and speaker diaphragms; heat-resistant protective films such as cover lay films for flexible printed circuit and heat-resistant masking tapes; heat-resistant adhesive films such as heat-resistant barcode labels and various industrial process tapes; heat-resistant reflectors; heat-resistant release films; heat-conductive films; films for semiconductor processes such as dicing tapes, dicing tape-integrated die attach films (dicing die attach films), dicing tape-integrated die bonding films (dicing die bonding films), dicing tape-integrated wafer back surface protective films, and films for backgrinding; materials for molded decoration such as in-mold decoration, film insert molding, vacuum molding, and pressure molding; adhesive materials such as interlayer adhesives for laminates or multilayer printed circuits, bonding sheets for flexible printed circuits, bonding sheets for flexible flat cables, and bonding sheets for cover lay films; Impact absorbent materials such as tube coating, electric wire coating, impact absorbent films, and sealing films; photographic films; agricultural materials; medical materials; materials for civil engineering and construction; filtration membranes, etc., household and industrial materials; and films for fibrous materials. The film of the present invention may be used in an unstretched state for the above applications, or may be stretched and used as a stretched film for the above applications.

EXAMPLES

Hereinafter, the present invention is described specifically by way of Examples, but the present invention is not limited by these Examples.

A. Evaluation methods

Physical properties of polyamides and polyamide films were evaluated by the following methods.

(1) Resin composition

The pellets or powder obtained was analyzed by $^1$H-NMR using a high-resolution nuclear magnetic resonance apparatus (ECA-500NMR manufactured by JEOL Ltd.), and the resin composition was determined from the peak intensity of each copolymer component (resolution: 500 MHz, solvent: mixed solvent with a volume ratio of deuterated trifluoroacetic acid and deuterated chloroform of 4/5, temperature: 23°C). In Table 2, the resin composition is shown in mass ratio as a final composition.

(2) Melting point, crystalline melting enthalpy

A few mg of the obtained pellets or powder was sampled, and a temperature of the sample was raised to 350°C at a heating rate of 20°C/min by using a differential scanning calorimeter DSC-7 (manufactured by PerkinElmer, Inc.), then held at 350°C for 5 minutes, lowered to 25°C at a cooling rate of 20°C/min, further held at 25°C for 5 minutes, and re-heated at a heating rate of 20°C/min.

The top of the thermic peak observed during the re-heating was defined as a melting point, and the amount of heat of the endothermic peak was defined as a crystalline melting enthalpy. The crystalline melting enthalpy is determined from a peak area in a temperature range from the start to the end of melting.

(3) Shore D hardness (flexibility property)

The pellets or powder obtained was sufficiently dried, and then molded by using an injection molding machine under the conditions of a cylinder temperature of 340°C and a mold temperature of 80°C, and a test piece (dumbbell piece) for measuring general physical properties conforming ISO standard was fabricated. Using the obtained test piece, Shore D hardness was measured in accordance with ASTM D 2240.

(4) Elongation recovery rate (flexibility property), hysteresis loss rate (rubber elastic property)

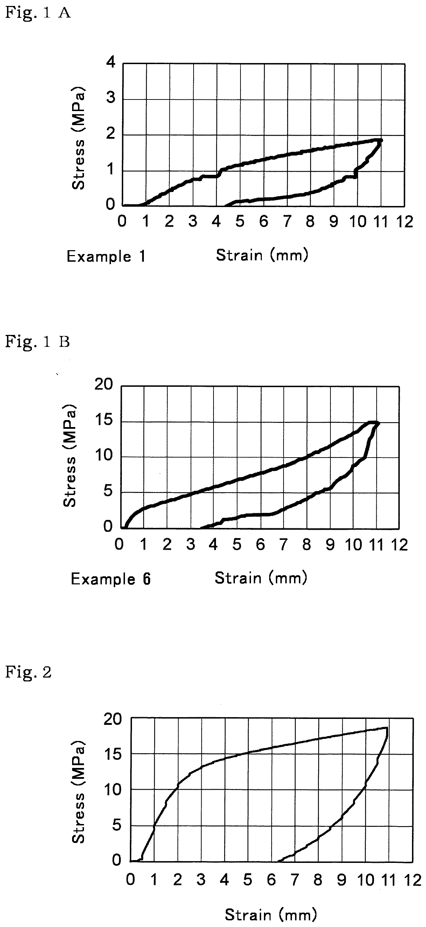

A dumbbell test piece was prepared in the same manner as in (3) above, and the elongation recovery rate and the hysteresis loss rate thereof were measured using a testing machine Model 2020 manufactured by INTESCO Co., Ltd. Under an environment of 23°C and the conditions including a distance between chucks of 55 mm and a tensile test speed of 5 mm/min, the sample was pulled by 11 mm and immediately returned to the original state at the same speed, and a residual strain A (mm) when the stress became 0 was determined. The hysteresis curves of Examples 1 and 6 and Comparative Example 1 are shown in Figs. 1A, 1B, and 2, respectively.

The elongation recovery rate was calculated from the following formula using the residual strain A.

$$\text{Elongation recovery rate (\%)} = (11 - A)/11 \times 100$$

Furthermore, on the basis of the hysteresis curves obtained, hysteresis loss rates were calculated from the following formula.

$$\text{Hysteresis loss rate (\%)} = \text{area(Oabcd)}/\text{area(OabeO)} \times 100$$

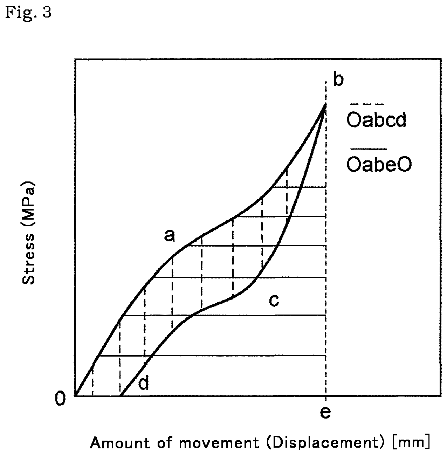

For example, in Fig. 3, the area (Oabcd) is an area of a region indicated by broken lines (longitudinal broken lines), and the area (OabeO) is an area of a region indicated by solid lines (lateral solid lines). Fig. 3 is a schematic diagram illustrating a hysteresis curve for explaining a method of calculating a hysteresis loss rate.

(5) Tensile strength at break, tensile elongation at break (flexibility property) and tensile modulus of elasticity of film

Measurement was carried out under an environment including a temperature of 20°C and a humidity of 65% in accordance with JIS K 7127. The size of the sample was 10 mm × 150 mm, the initial distance between chucks was 100 mm, and the tensile speed was 500 mm/min.

(6) Water absorption rate of film

Following vacuum drying at 50°C for 24 hours, the film was weighed, and then immersed in pure water at 23°C. After 24 hours, the moisture on the surface was wiped off and the film was weighed, and the water absorption rate was determined from the weight change before and after the immersion.

(7) Heat shrinkage rate of film

In accordance with JIS K 7133, the shrinkage rate of the film when heat-treated at 200°C for 15 minutes was measured.

(8) Dielectric properties of film

The dielectric constant and the dielectric dissipation factor at 5.8 GHz were measured by a cavity resonator perturbation method. The size of the sample was set to 2 mm × 50 mm.

B. Raw materials

The following raw materials were used.

· Dimer acid: Pripol 1009 manufactured by Croda International Pic
· Terephthalic acid:

· Dimer diamine: Priamine 1075 manufactured by Croda International Pic

· Decanediamine:

· Sodium hypophosphite monohydrate:

•   Heat stabilizer: Sumilizer GA-80 manufactured by Sumitomo Chemical Co., Ltd.

Example 1

· Preparation of reaction product

Into a ribbon blender type reactor were charged 23.5 parts by mass of terephthalic acid and 0.1 parts by mass of sodium hypophosphite monohydrate, and the reactor was heated to 170°C under nitrogen sealing with stirring at a rotation speed of 30 rpm. Then, 24.4 parts by mass of 1,10-decanediamine heated to 100°C was added continuously (in a continuous impregnation system) over 2.5 hours using an impregnator while the temperature was maintained at 170°C and the rotation speed was maintained at 30 rpm to afford a reaction product. The molar ratio of the raw material monomers was terephthalic acid : 1,10-decanediamine = 50.0 : 50.0.

· Preparation of polyamide

A reaction vessel equipped with a heating mechanism and a stirring mechanism was charged with 26.7 parts by mass of a dimer acid and 25.3 parts by mass of a dimer diamine. After stirring at 100°C for 1 hour, 47.9 parts by mass of the above reaction product was added thereto with stirring.
Then, the mixture was heated to 260°C with stirring, and polymerization was carried out at 260°C for 5 hours under a nitrogen stream at normal pressure while condensed water was removed outside the system. During the polymerization, the system was in a suspension solution state.
After completion of the polymerization, the product was discharged, cut, and dried to afford polyamide P1 in a pellet form.

· Preparation of film (simultaneously biaxially stretched film)

100 parts by mass of the obtained pellets and 0.4 parts by mass of Sumilizer GA-80 were dry-blended, charged into a twin screw extruder heated to a cylinder temperature of 330°C and having a screw diameter of 26 mm, melt-kneaded, and extruded into a strand shape. Then, the strand was cooled and cut to afford pellets.
The obtained pellets were fed to a single-screw extruder heated to a cylinder temperature of 330°C and having a screw diameter of 50 mm, and melted to afford a molten polymer. The molten polymer was filtered using a metal fiber sintered filter ("NF-13" manufactured by Nippon Seisen Co., Ltd., nominal filtration diameter: 60 $\mu$m). Then, the molten polymer was extruded into a film shape through a T die heated at 330°C to afford a film-shaped melt. The melt was brought into close contact with a cooling roll set at 0°C by an electrostatic application method and cooled to afford a substantially non-oriented unstretched polyamide film.
A resin composition of a polyamide component of the obtained unstretched film was determined and found to be the same as the resin composition of the polyamide used.
The obtained unstretched polyamide film was subjected to biaxial stretching using a flat simultaneous biaxial stretching machine while both ends of the film were held with clips. The stretching conditions were as follows: the temperature of a preheating section was 80°C, the temperature of a stretching section was 80°C, the stretching strain rate in MD was 2400%/min, the stretching strain rate in TD was 2400%/min, the stretch ratio in MD was 2.3 times, and the stretch ratio in TD was 2.3 times. Following the stretching, the film was heat-fixed at 250°C in the same tenter of the biaxial stretching machine, and relaxed by 6% in the transverse direction of the film to afford a biaxially stretched polyamide film.
When the resin composition of the polyamide component of the obtained stretched film was determined, the resin composition was the same as the resin composition of the polyamide used and the resin composition of the polyamide component of the unstretched film.

Examples 2 to 5

Polyamides P2 to P5 were obtained in the same manner as in Example 1 except that the amounts of monomers to be charged into the reaction vessel were changed as shown in Table 1. In addition, the obtained pellets were subjected to melt-kneading, preparation of unstretched films, and simultaneous biaxial stretching by the same operations as in Example 1, affording simultaneously biaxially stretched films.
In the step of preparing a polyamide, the amount of a reaction product added to the reaction vessel was equal to the total amount of terephthalic acid and decanediamine used in the step of preparing the reaction product.

Example 6

· Preparation of reaction product

Into a ribbon blender type reactor were charged 26.8 parts by mass of terephthalic acid and 0.1 parts by mass of sodium hypophosphite monohydrate, and the reactor was heated to 170°C under nitrogen sealing with stirring at a rotation speed of 30 rpm. Then, 23.4 parts by mass of 1,10-decanediamine heated to 100°C was added continuously (in a continuous impregnation system) over 2.5 hours using an impregnator while the temperature was maintained at 170°C and the rotation speed was maintained at 30 rpm to afford a reaction product. The molar ratio of the raw material monomers was terephthalic acid : 1,10-decanediamine = 54.3 : 45.7.

· Preparation of polyamide

A reaction vessel equipped with a heating mechanism and a stirring mechanism was charged with 18.6 parts by mass of a dimer acid and 31.1 parts by mass of a dimer diamine. After stirring at 100°C for 1 hour, 50.2 parts by mass of the above reaction product was added thereto with stirring.
Then, the mixture was heated to 260°C with stirring, and polymerization was carried out at 260°C for 5 hours under a nitrogen stream at normal pressure while condensed water was removed outside the system. During the polymerization, the system was in a suspension solution state.
After completion of the polymerization, the product was discharged, cut, and dried to afford polyamide P6.

· Preparation of simultaneously biaxially stretched film

The obtained pellets were subjected to melt-kneading, preparation of unstretched films, and simultaneous biaxial stretching by the same operations as in Example 1, affording simultaneously biaxially stretched films.

Examples 7 to 9

Polyamides P7 to P9 were obtained in the same manner as in Example 6 except that the amounts of monomers to be charged into the reaction vessel were changed as shown in Table 1. In addition, the obtained pellets were subjected to melt-kneading, preparation of unstretched films, and simultaneous biaxial stretching by the same operations as in Example 1, affording simultaneously biaxially stretched films.
In the step of preparing a polyamide, the amount of a reaction product added to the reaction vessel was equal to the total amount of terephthalic acid and decanediamine used in the step of preparing the reaction product.

Example 10

· Preparation of reaction product

Into a ribbon blender type reactor were charged 29.7 parts by mass of terephthalic acid and 0.1 parts by mass of sodium hypophosphite monohydrate, and the reactor was heated to 170°C under nitrogen sealing with stirring at a rotation speed of 30 rpm. Then, 20.8 parts by mass of 1,6-hexanediamine heated to 100°C was added continuously (in a continuous impregnation system) over 2.5 hours using an impregnator while the temperature was maintained at 170°C and the rotation speed was maintained at 30 rpm to afford a reaction product. The molar ratio of the raw material monomers was terephthalic acid : 1,6-hexanediamine = 50.0 : 50.0.

· Preparation of polyamide

A reaction vessel equipped with a heating mechanism and a stirring mechanism was charged with 25.4 parts by mass of a dimer acid and 24.0 parts by mass of a dimer diamine. After stirring at 100°C for 1 hour, 50.5 parts by mass of the above reaction product was added thereto with stirring.
Then, the mixture was heated to 260°C with stirring, and polymerization was carried out at 260°C for 5 hours under a nitrogen stream at normal pressure while condensed water was removed outside the system. During the polymerization, the system was in a suspension solution state.
After completion of the polymerization, the product was discharged, cut, and dried to afford polyamide P10 in a pellet form.

· Preparation of simultaneously biaxially stretched film

The obtained pellets were subjected to melt-kneading, preparation of unstretched films, and simultaneous biaxial stretching by the same operations as in Example 1, affording simultaneously biaxially stretched films.

Examples 11, 16, 19

· Preparation of unstretched film

In Examples 11, 16, and 19 were heat-treated at 250°C the substantially non-oriented unstretched polyamide films obtained in Examples 1, 3, and 4, respectively.

Examples 12 to 14

· Preparation of simultaneously biaxially stretched film

Biaxially stretched polyamide films were obtained by carrying out the same operations as in Example 1 except that the substantially non-oriented unstretched polyamide film obtained in Example 1 was used and that the production conditions were changed as shown in Table 3.

Examples 17, 18

· Preparation of simultaneously biaxially stretched film

Biaxially stretched polyamide films were obtained by carrying out the same operations as in Example 1 except that the substantially non-oriented unstretched polyamide film obtained in Example 3 was used and that the production conditions were changed as shown in Table 3.

Examples 20 and 21

· Preparation of simultaneously biaxially stretched film

Biaxially stretched polyamide films were obtained by carrying out the same operations as in Example 1 except that the substantially non-oriented unstretched polyamide film obtained in Example 4 was used and that the production conditions were changed as shown in Table 3.

Example 15 (Sequentially biaxially stretched film)

The substantially non-oriented unstretched polyamide film obtained in Example 1 was biaxially stretched with a flat sequential axial stretching machine. First, the unstretched film was heated to 80°C by roll heating, infrared heating, or the like, and stretched 3.0 times in MD at a stretching strain rate of 2400%/min to afford a longitudinally stretched film. Subsequently, both ends of the film in the transverse direction were continuously held with clips of a lateral stretching machine and lateral stretching was carried out. The temperature of the preheating section in the TD stretching was 85°C, the temperature of the stretching section was 85°C, the stretching strain rate was 2400%/min, and the stretch ratio in TD was 3.0 times. Then, the film was heat-fixed at 250°C in the same tenter of the lateral stretching machine, and subjected to a relaxation treatment by 6% in the transverse direction of the film to afford a biaxially stretched polyamide film.

Comparative Example 1

A reaction vessel equipped with a heating mechanism and a stirring mechanism was charged with 26.7 parts by mass of a dimer acid, 25.3 parts by mass of a dimer diamine, 23.5 parts by mass of terephthalic acid, 24.4 parts by mass of 1,10-decanediamine, and 0.1 parts by mass of sodium hypophosphite monohydrate.
Then, the mixture was heated to 260°C with stirring, and polymerization was carried out at 260°C for 5 hours under a nitrogen stream at normal pressure while condensed water was removed outside the system. During the polymerization, the system was in a suspended state.
After completion of the polymerization, the product was discharged, cut, and dried to afford polyamide P11 in a pellet form.
In addition, the obtained pellets were subjected to melt-kneading, preparation of unstretched films, and simultaneous biaxial stretching by the same operations as in Example 1, affording simultaneously biaxially stretched films.

Comparative Examples 2 to 5

Polyamides P12 to 15 were obtained by carrying out the same operations as in Comparative Example 1 except that the charged amounts of the dimer acid, the dimer diamine, terephthalic acid, and 1,10-decanediamine were changed to the charged amounts given in Table 1.
In addition, the obtained pellets were subjected to melt-kneading, preparation of unstretched films, and simultaneous biaxial stretching by the same operations as in Example 1, affording simultaneously biaxially stretched films.

Comparative Example 6

A powder stirrer equipped with a heating mechanism was charged with 49.0 parts by mass of terephthalic acid and 0.1 parts by mass of sodium hypophosphite monohydrate. While the mixture was heated at 170°C with stirring, 50.9 parts by mass of 1,10-decanediamine was added little by little over 3 hours to afford a reaction product. Then, the reaction product was heated to 250°C with stirring, and polymerization was carried out at 250°C for 7 hours under a nitrogen stream at normal pressure while condensed water was removed outside the system. During the polymerization, the system was in a powder state.
After completion of the polymerization, the product was discharged to afford polyamide P16 in a powder form.
Using the obtained powder, the same operation as in Example 1 was carried out to perform melt-kneading, production of an unstretched film, and simultaneous biaxial stretching, thereby obtaining a simultaneously biaxially stretched film.

Comparative Example 7

A reaction vessel equipped with a heating mechanism and a stirring mechanism was charged with 51.3 parts by mass of a dimer acid, 48.6 parts by mass of a dimer diamine, and 0.1 parts by mass of sodium hypophosphite monohydrate.
Then, the mixture was heated to 260°C with stirring, and polymerization was carried out at 260°C for 5 hours under a nitrogen stream at normal pressure while condensed water was removed outside the system. During the polymerization, the system was in a uniform molten state.
After completion of the polymerization, the product was discharged, cut, and dried to afford polyamide P17 in a pellet form.
Melt-kneading, preparation an unstretched film, and simultaneous biaxial stretching were carried out in the same manner as in Example 1 using the obtained pellets, but a stretched film could not be obtained.

Comparative Example 8

A reaction vessel equipped with a heating mechanism and a stirring mechanism was charged with 51.0 parts by mass of polyoxytetramethylene glycol (PTMG 1000) having amino groups in place of the hydroxyl groups at both terminals and having a number average molecular weight of 1000, 28.3 parts by mass of terephthalic acid, 20.6 parts by mass of 1,10-decanediamine, and 0.1 parts by mass of sodium hypophosphite monohydrate.
Then, the mixture was heated to 250°C with stirring, and polymerization was carried out at 250°C for 5 hours under a nitrogen stream at normal pressure while condensed water was removed outside the system. During the polymerization, the system was in a suspension solution state.
After completion of the polymerization, the product was discharged, cut, and dried to afford polyamide P18 in a pellet form, but the polyamide was brittle and was not suitable for practical use.

Comparative Examples 9, 11, and 13

• Preparation of unstretched film

In Comparative Examples 9, 11, and 13 were heat-treated at 200°C the substantially non-oriented unstretched polyamide films obtained in Comparative Examples 1, 3, and 4, respectively.

Comparative Examples 10, 12, and 14

In Comparative Examples 10, 12, and 14, biaxially stretched polyamide films were obtained by carrying out the same operations as in Example 1 except that the substantially non-oriented unstretched polyamide films obtained in Comparative Examples 1, 3, and 4 were, respectively used and that the production conditions were changed as shown in Table 3.

The charged composition of the polyamides obtained in Examples 1 to 10 and Comparative Examples 1 to 8, the molar ratio of the components (C) and (D), and the polymerization method are shown in Table 1.

[Table 1]

| | | | | Example | | | | | | | | | | Comparative Example | | | | | | | |
|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 1 | 2 | 3 | 4 | 5 | 6 | 7 | 8 |
| Type of polyamide | | | | P1 | P2 | P3 | P4 | P5 | P6 | P7 | P8 | P9 | P10 | P11 | P12 | P13 | P14 | P15 | P16 | P17 | P18 |
| Polyamide resin | Production conditions / Charge Composition | Dicarboxylic acid | A | 26.7 | 44.0 | 36.0 | 14.7 | 5.4 | 18.6 | 24.2 | 11.2 | 11.2 | 25.4 | 26.7 | 44.0 | 36.0 | 14.7 | 5.4 | - | 51.3 | - |
| | | | C | 23.5 | 6.9 | 14.6 | 34.9 | 43.8 | 26.8 | 25.1 | 37.9 | 36.0 | 29.7 | 23.5 | 6.9 | 14.6 | 34.9 | 43.8 | 49.0 | - | 28.3 |
| | | Diamine | B | 25.3 | 41.7 | 34.2 | 14.0 | 5.1 | 31.1 | 25.6 | 16.6 | 16.5 | 24.0 | 25.3 | 41.7 | 34.2 | 14.0 | 5.1 | - | 48.6 | - |
| | | | D1 | 24.4 | 7.3 | 15.1 | 36.3 | 45.6 | 23.4 | 25.0 | 34.2 | 36.2 | - | 24.4 | 7.3 | 15.1 | 36.3 | 45.6 | 50.9 | - | 20.6 |
| | | | D2 | - | - | - | - | - | - | - | - | - | 20.8 | - | - | - | - | - | - | - | - |
| | | | E | - | - | - | - | - | - | - | - | - | - | - | - | - | - | - | - | - | 51.0 |
| | | Catalyst | F | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 |
| | | (C):(D) molar ratio | | 50.0:50.0 | 49.7:50.3 | 50.0:50.0 | 49.9:50.1 | 49.0:50.1 | 54.3:45.7 | 51.0:49.0 | 53.5:46.5 | 50.8:49.2 | 50.0:50.0 | 50.0:50.0 | 49.7:50.3 | 50.0:50.0 | 49.9:50.1 | 49.0:50.1 | 50.0:50.0 | - | 58.8:41.2 |
| | | Polymerization method | | Two-step method | Two-step method | Two-step method | Two-step method | Two-step method | Two-step method | Two-step method | Two-step method | Two-step method | Two-step method | One-step method | One-step method | One-step method | One-step method | One-step method | One-step method | One-step method | One-step method |

The abbreviations in Table 1 are as follows.

A = Aliphatic acid dicarboxylic acid (A) having 18 or more carbon atoms (dimer acid)
C = Aromatic dicarboxylic acid (C) having 12 or less carbon atoms (terephthalic acid)
B = Aliphatic diamine (B) having 18 or more carbon atoms (dimer diamine)
D1 = Aliphatic diamine (D) having 12 or less carbon atoms (decanediamine)
D2 = Aliphatic diamine (D) having 12 or less carbon atoms (1,6-hexanediamine)
E = PTMG 1000 having amino groups at both ends
F = Sodium hypophosphite monohydrate

The final composition of the polyamides obtained in Examples 1 to 10 and Comparative Examples 1 to 8 and the evaluation of the polyamides obtained and the biaxially stretched films obtained are shown in Table 2.

[Table 2]

| | | | | Example | | | | | | | | | | Comparative Example | | | | | | | |
|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 1 | 2 | 3 | 4 | 5 | 6 | 7 | 8 |
| Type of polyamide | | | | P1 | P2 | P3 | P4 | P5 | P6 | P7 | P8 | P9 | P10 | P11 | P12 | P13 | P14 | P15 | P16 | P17 | P18 |
| Polyamide resin | Evaluation / Final composition | Dicarboxylic acid | A | 27.0 | 43.3 | 36.1 | 15.0 | 5.7 | 18.8 | 24.4 | 11.5 | 11.5 | 25.7 | 27.0 | 43.3 | 36.1 | 15.0 | 5.7 | - | 49.9 | - |
| | | | C | 20.1 | 5.8 | 11.3 | 31.5 | 38.7 | 23.4 | 21.8 | 37.0 | 34.8 | 28.9 | 20.1 | 5.8 | 11.3 | 31.5 | 38.7 | 43.7 | - | 24.0 |
| | | Diamine | B | 27.1 | 43.4 | 36.0 | 15.8 | 5.7 | 32.9 | 27.4 | 17.1 | 16.9 | 24.7 | 27.1 | 43.4 | 36.0 | 15.8 | 5.7 | - | 50.1 | - |
| | | | D1 | 25.8 | 7.5 | 16.6 | 37.7 | 49.9 | 24.9 | 26.4 | 34.4 | 36.8 | - | 25.8 | 7.5 | 16.6 | 37.7 | 49.9 | 56.3 | - | 21.7 |
| | | | D2 | - | - | - | - | - | - | - | - | - | 20.7 | - | - | - | - | - | - | - | - |
| | | | E | - | - | - | - | - | - | - | - | - | - | - | - | - | - | - | - | - | 54.3 |
| | | Total content (% by mass) of (A) and (B) | | 54.1 | 86.7 | 72.1 | 30.7 | 11.4 | 51.7 | 51.8 | 28.6 | 28.4 | 50.4 | 54.1 | 86.7 | 72.1 | 30.7 | 11.4 | 0.0 | 100.0 | 0.0 |
| | | Melting point °C | | 302○ | 300○ | 301○ | 305○ | 310○ | 302 | 302 | 305 | 305 | 315 | 302 | 300 | 301 | 305 | 310 | 315 | * | * |
| | | Crystalline melting enthalpy J/g | | 42 | 20 | 27 | 60 | 77 | 43 | 41 | 60 | 59 | 47 | 20 | 5 | 15 | 24 | 40 | 80 | * | * |
| | | Shore D hardness (Decrease rate) (1) | | 56 (7○) | 29 (26○) | 38 (40○) | 65 (7○) | 73 (6○) | 58 | 56 | 65 | 65 | 60 | 60 | 39 | 63 | 70 | 78 | 83 | 33 | * |
| | | Elongation recovery rate (Increase rate) (2) % | | 60 (43○) | 88 (22○) | 68 (100○) | 57 (90○) | 52 (126○) | 68 | 70 | 60 | 58 | 54 | 42 | 72 | 34 | 30 | 23 | 20 | 90 | * |
| | | Hysteresis loss rate (Decrease rate) (3) % | | 75 (7○) | 49 (18○) | 55 (13○) | 80 (6○) | 84 (5○) | 63 | 60 | 82 | 80 | 81 | 81 | 60 | 63 | 85 | 88 | - | - | * |
| Film | Production conditions | Stretching method | | Simultaneous | Simultaneous | Simultaneous | Simultaneous | Simultaneous | Simultaneous | Simultaneous | Simultaneous | Simultaneous | Simultaneous | Simultaneous | Simultaneous | Simultaneous | Simultaneous | Simultaneous | Simultaneous | - | - |
| | | Stretch ratio | MD | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 | - | - |
| | | | TD | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 | - | - |
| | | Heat setting temperature °C | | 250 | 250 | 250 | 250 | 250 | 250 | 250 | 250 | 250 | 250 | 250 | 250 | 250 | 250 | 250 | 250 | - | - |
| | Evaluation | Tensile strength at break MD MPa | | 24 | 18 | 20 | 37 | 59 | 76 | 74 | 120 | 116 | 33 | 65 | 48 | 54 | 102 | 160 | 200 | - | - |
| | | Tensile elongation at break MD % | | 256 | 395 | 307 | 215 | 186 | 143 | 165 | 120 | 139 | 221 | 176 | 272 | 211 | 148 | 128 | 117 | - | - |
| | | Tensile modulus of elasticity MD MPa | | 128 | 58 | 65 | 303 | 436 | 850 | 434 | 2019 | 1032 | 280 | 618 | 280 | 316 | 1468 | 2111 | 2810 | - | - |
| | | Water absorption rate % | | 0.6 | 0.4 | 0.5 | 0.9 | 1.5 | 0.6 | 0.6 | 0.9 | 0.9 | 0.8 | 0.6 | 0.4 | 0.5 | 0.9 | 1.5 | 2.2 | 0.3 | - |

*: Unmeasurable (1) The decrease rates (%) of Shore D hardness in Examples 1 to 5 are rates of reduction from the Shore D hardness of Comparative Examples 1 to 5, respectively. (2) The increase rates (%) of elongation recovery rate in Examples 1 to 5 are rates of increase from the elongation recovery rates of Comparative Examples 1 to 5, respectively. (3) The decrease rates (%) of hysteresis loss rate in Examples 1 to 5 are rates of reduction from the hysteresis loss rates of Comparative Examples 1 to 5, respectively.

The abbreviations in Table 2 are as follows.
A to C, D1, D2, and E are the same as A to C, D1, D2, and E in Table 1, respectively.

(1) Decrease rate (%) of Shore D hardness;
(2) Increase rate (%) of elongation recovery rate;
(3) Decrease rate (%) of hysteresis loss rate.

In Table 2, the values of the above (1) to (3) are shown only in Examples 1 to 5 because there are Comparative Examples 1 to 5 having the same monomer composition as in Examples 1 to 5, respectively. It is meaningful to compare the values in Example and Comparative Example the same in monomer composition.

The decrease rates (%) of Shore D hardness in Examples 1 to 5 are rates of reduction from the Shore D hardness of Comparative Examples 1 to 5, respectively.

The decrease rate of Shore D hardness is usually 2% or more (△: a range having no practical problem), preferably 5% or more (O: good), and more preferably 6.5% or more (⊙: superior).

The increase rates (%) of elongation recovery rate in Examples 1 to 5 are rates of increase from the elongation recovery rates of Comparative Examples 1 to 5, respectively.

The increase rate of elongation recovery rate is usually 10% or more (△: a range having no practical problem), preferably 20% or more (O: good), and more preferably 40% or more (⊙: superior).

The decrease rates (%) of hysteresis loss rate in Examples 1 to 5 are rates of reduction from the hysteresis loss rates of Comparative Examples 1 to 5, respectively.

The decrease rate of hysteresis loss rate is usually 2% or more (△: a range having no practical problem), preferably 4% or more (O: good), and more preferably 5.5% or more (⊙: superior).

In Examples 1 to 5, the melting point is usually 240°C or more (△: a range having no practical problem), preferably 270°C or more (O: good), and more preferably 300°C or more (⊙: superior).

In Examples 1 to 5, for all the evaluation results of the melting point, the decrease rate (%) of the Shore D hardness, the increase rate (%) of elongation recovery rate, and the decrease rate (%) of hysteresis loss rate, it is more preferable as the number of evaluation items evaluated as ⊙ is larger.

The evaluation of the unstretched films obtained in Examples 11, 16, and 19 and the evaluation of the biaxially stretched films obtained in Examples 12 to 15, 17, 18, 20, and 21 are shown in Table 3.

[Table 3]

| | | | Example | | | | | | | | | | | Comparative Example | | | | | |
|---|---|---|---|---|---|---|---|---|---|---|---|---|---|---|---|---|---|---|---|
| | | | 11 | 12 | 13 | 14 | 15 | 16 | 17 | 18 | 19 | 20 | 21 | 9 | 10 | 11 | 12 | 13 | 14 |
| Type of polyamide | | | P1 | | | | | P3 | | | P4 | | | P11 | | P13 | | P14 | |
| Film Production conditions | Stretching method | | - | Simultaneous | Simultaneous | Simultaneous | Sequential | - | Simultaneous | Simultaneous | - | Simultaneous | Simultaneous | - | Simultaneous | - | Simultaneous | - | Simultaneous |
| | Stretch ratio | MD | - | 1.5 | 3 | 5 | 3 | - | 1.5 | 3 | - | 1.5 | 3 | - | 3 | - | 3 | - | 3 |
| | | TD | - | 1.5 | 3 | 5 | 3 | - | 1.5 | 3 | - | 1.5 | 3 | - | 3 | - | 3 | - | 3 |
| | Heat setting temperature | °C | 250 | 250 | 250 | 250 | 250 | 250 | 250 | 250 | 250 | 250 | 250 | 250 | 250 | 250 | 250 | 250 | 250 |
| Evaluation | Tensile strength at break MD | MPa | 19 | 20 | 26 | 35 | 27 | 16 | 17 | 22 | 29 | 31 | 40 | 56 | 76 | 47 | 63 | 88 | 119 |
| | Tensile elongation at break MD | % | 359 | 317 | 217 | 161 | 176 | 431 | 380 | 260 | 302 | 266 | 182 | 247 | 149 | 296 | 179 | 208 | 125 |
| | Tensile modulus of elasticity MD | % | 112 | 118 | 135 | 165 | 145 | 57 | 60 | 69 | 265 | 279 | 320 | 539 | 652 | 276 | 333 | 1280 | 1549 |

The evaluation of heat shrinkage rate at 200°C and dielectric properties (dielectric constant and the dielectric dissipation factor) of Examples 11, 1, 3, and 4 and Comparative Examples 9, 1, 3, 4, and 6 is shown in Table 4.

[Table 4]

| | | | Example | | | | Comparative Example | | | | |
|---|---|---|---|---|---|---|---|---|---|---|---|
| | | | 11 | 1 | 3 | 4 | 9 | 1 | 3 | 4 | 6 |
| Type of polyamide | | | P1 | | P3 | P4 | P11 | | P13 | P14 | P16 |
| Film | Production conditions | Stretching method | - | Simultaneous | Simultaneous | Simultaneous | - | Simultaneous | Simultaneous | Simultaneous | Simultaneous |
| | | Stretch ratio MD | - | 2.3 | 2.3 | 2.3 | - | 2.3 | 2.3 | 2.3 | 2.3 |
| | | TD | - | 2.3 | 2.3 | 2.3 | - | 2.3 | 2.3 | 2.3 | 2.3 |
| | | Heat setting temperature °C | 250 | 250 | 250 | 250 | 250 | 250 | 250 | 250 | 250 |
| | Evaluation | Heat shrinkage rate at 200°C % | 0.1 | 0.6 | 0.7 | 0.5 | 0.2 | 0.7 | 0.7 | 0.6 | 0.1 |
| | | Dielectric constant (5.8 GHz) - | 2.6 | 2.6 | 2.6 | 2.7 | 2.6 | 2.6 | 2.6 | 2.7 | 2.9 |
| | | Dielectric dissipation factor (5.8 GHz) - | 0.006 | 0.006 | 0.005 | 0.007 | 0.006 | 0.006 | 0.005 | 0.007 | 0.009 |

The polyamides of Examples 1 to 10 satisfied the requirements prescribed in the present invention, and therefore all had a melting point of 240°C or more as an index of heat-resisting properties, an elongation recovery rate in a hysteresis test of 50% or more as an index of flexibility properties, and thus were superior in heat-resisting property and flexibility property. In addition, since in the polyamides of Examples 1 to 10, the crystalline melting enthalpy, which is an index of crystallinity of a hard segment, was 20 J/g or more, hard segments could sufficiently play a role of a crosslinking point and the polyamides were superior in rubber elastic properties. The obtained stretched films were also superior in flexibility properties.

Comparison between the polyamides of Examples 1 to 5 and the polyamides of Comparative Examples 1 to 5 shows that the polyamides obtained by the two-step method in which a reaction product of a hard segment is prepared and then added to a reaction product of a soft segment and polymerized are greater in elongation recovery rate and crystalline melting enthalpy, smaller in Shore D hardness and hysteresis loss rate, and improved in flexibility properties and rubber elastic properties than the polyamides obtained by the conventional one-step method in which raw materials are charged together and polymerized. The obtained stretched films also had an improved elongation and a decreased elastic modulus.

The polyamides of Comparative Examples 1 and 3 to 5 had a low elongation recovery rate and low flexibility properties.

In the polyamide of Comparative Example 2, the crystalline melting enthalpy was small, and the crystallinity of hard segments was low.

The polyamide of Comparative Example 6 did not have the components (A) and (B), which form a soft segment, so that the polyamide had a low elongation recovery rate and low flexibility properties.

The polyamide of Comparative Example 7 did not have the components (C) and (D), which form a hard segment, so that the polyamide had no melting point and low heat-resisting properties.

INDUSTRIAL APPLICABILITY

Since the polyamide and the film of the present invention are superior in all of heat-resisting properties, flexibility properties, and rubber elastic properties, they are useful for all applications, such as packaging materials, in which these properties are required.

**Claims**

1. A polyamide comprising a unit comprised of an aliphatic dicarboxylic acid (A) having 18 or more carbon atoms, a unit comprised of an aliphatic diamine (B) having 18 or more carbon atoms, a unit comprised of an aromatic dicarboxylic acid (C) having 12 or less carbon atoms and a unit comprised of an aliphatic diamine (D) having 12 or less carbon atoms, wherein the polyamide has a melting point of 240°C or more, a crystalline melting enthalpy of 20 J/g or more and an elongation recovery rate of 50 % or more in a hysteresis test.

2. The polyamide according to claim 1, wherein the aliphatic dicarboxylic acid (A) having 18 or more carbon atoms is a dimer acid.

3. The polyamide according to claim 1 or 2, wherein the aliphatic diamine (B) having 18 or more carbon atoms is a dimer diamine.

4. The polyamide according to any one of claims 1 to 3, wherein the aromatic dicarboxylic acid (C) having 12 or less carbon atoms is terephthalic acid.

5. The polyamide according to any one of claims 1 to 4, wherein the aliphatic diamine (D) having 12 or less carbon atoms is 1,10-decanediamine.

6. The polyamide according to any one of claims 1 to 5, wherein a total content of the unit comprised of the aliphatic dicarboxylic acid (A) having 18 or more carbon atoms and the unit comprised of the aliphatic diamine (B) having 18 or more carbon atoms is 10 to 90% by mass relative to all monomer components constituting the polyamide.

7. The polyamide according to any one of claims 1 to 6, wherein a total content of the unit comprised of the aliphatic dicarboxylic acid (A) having 18 or more carbon atoms and the unit comprised of the aliphatic diamine (B) having 18 or more carbon atoms is 20 to 80% by mass relative to all monomer components constituting the polyamide.

8. The polyamide according to any one of claims 1 to 7, wherein

   the aliphatic dicarboxylic acid (A) having 18 or more carbon atoms has 30 to 40 of carbon atoms,
   the aliphatic diamine (B) having 18 or more carbon atoms has 30 to 40 of carbon atoms,
   the aromatic dicarboxylic acid (C) having 12 or less carbon atoms has 6 to 12 of carbon atoms, and
   the aliphatic diamine (D) having 12 or less carbon atoms has 6 to 12 of carbon atoms.

9. The polyamide according to any one of claims 1 to 8, wherein

   a content of the unit comprised of the aliphatic dicarboxylic acid (A) having 18 or more carbon atoms is 3 to 45% by mass relative to all monomer components constituting the polyamide,
   a content of the unit comprised of the aliphatic diamine (B) having 18 or more carbon atoms is 3 to 45% by mass relative to all monomer components constituting the polyamide,
   a content of the unit comprised of the aromatic dicarboxylic acid (C) having 12 or less carbon atoms is 3 to 45% by mass relative to all monomer components constituting the polyamide, and
   a content of the unit comprised of the aliphatic diamine (D) having 12 or less carbon atoms is 3 to 52% by mass relative to all monomer components constituting the polyamide.

10. A molded body comprising the polyamide according to any one of claims 1 to 9.

11. A film comprising the polyamide of any one of claims 1 to 9.

12. A method for producing a polyamide, the method comprising reacting

    an aliphatic dicarboxylic acid (A) having 18 or more carbon atoms,
    an aliphatic diamine (B) having 18 or more carbon atoms, and
    a reaction product of an aromatic dicarboxylic acid (C) having 12 or less carbon atoms with an aliphatic diamine (D) having 12 or less carbon atoms
    to polymerize.

13. A method for producing a polyamide, the method comprising:
    reacting an aliphatic dicarboxylic acid (A) having 18 or more carbon atoms with an aliphatic diamine (B) having 18 or more carbon atoms in advance, and then reacting a reaction product of an aromatic dicarboxylic acid (C) having 12 or less carbon atoms with an aliphatic diamine (D) having 12 or less carbon atoms to polymerize.

14. The method for producing a polyamide according to claim 12 or 13, wherein the polyamide according to any one of claims 1 to 9 is produced.

Fig. 1 A

Example 1

Fig. 1 B

Example 6

Fig. 2

Fig. 3

Amount of movement (Displacement) [mm]

## INTERNATIONAL SEARCH REPORT

| | International application No. |
|---|---|
| | **PCT/JP2021/033552** |

### A. CLASSIFICATION OF SUBJECT MATTER

*C08G 69/26*(2006.01)i; *C08G 69/28*(2006.01)i
FI: C08G69/26; C08G69/28

According to International Patent Classification (IPC) or to both national classification and IPC

### B. FIELDS SEARCHED

Minimum documentation searched (classification system followed by classification symbols)

C08G69/00-69/50,C08G81/00-85/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | WO 2020/085360 A1 (UNITIKA LTD) 30 April 2020 (2020-04-30) claims, examples | 1-14 |
| P, A | WO 2021/106541 A1 (UNITIKA LTD) 03 June 2021 (2021-06-03) claims, examples | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 November 2021** | **22 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/033552**

| Patent document cited in search report | | | Publication date (day/month/year) | Patent family member(s) | Publication date (day/month/year) |
|---|---|---|---|---|---|
| WO | 2020/085360 | A1 | 30 April 2020 | (Family: none) | |
| WO | 2021/106541 | A1 | 03 June 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020085360 A
- JP 2014506614 A

- WO 2013042541 A